# EUROPEAN PATENT SPECIFICATION

(11) **EP 2 236 205 B1**
(45) Date of publication and mention of the grant of the patent: **25.04.2018**
(21) Application number: 10250436.2
(22) Date of filing: 10.03.2010
(51) Int. Cl.: B01J 35/04, B01D 53/94, F01N 3/022, F01N 3/10, F01N 3/28

(54) **Honeycomb Catalyst article**
Wabenförmiger Katalysatorartikel
Article catalytique en nid d'abeille

(30) Priority: 31.03.2009 JP 2009086950
(43) Date of publication of application: 06.10.2010
(73) Proprietor: NGK Insulators, Ltd., Nagoya-shi, Aichi 467-8530 (JP)
(72) Inventor: Chika Saito, Nogoya City, Aichi-ken, 467-8530 (JP); Hirose, Syogo, Nagoya City, Aichi-ken, 467-8530 (JP); Hirakawa, Toshihiro, Nagoya City, Aichi-ken, 467-8530 (JP)
(74) Representative: Naylor, Matthew John

(56) References cited:
- EP-A1- 0 459 534
- EP-A1- 1 384 508
- EP-A2- 1 384 507
- JP-A- 4 231 614
- US-A1- 2002 042 344

## Description

### Background of the Invention

### 1. Field of the Invention

The present invention relates to a honeycomb catalyst article. More specifically, the present invention relates to a honeycomb catalyst article satisfying both quick temperature-rising ability and high thermal capacity at the same time and capable of effectively purifying exhaust gas discharged from a diesel engine or the like.

### 2. Description of Related

In accordance with tightening of exhaust gas regulations regarding a diesel engine, there have been proposed various methods using a diesel particulate filter (DPF) for trapping particulate matter (PM) contained in exhaust gas from a diesel engine. Generally, there is employed a method where a catalyst for oxidizing PM is coated on a DPF, and a honeycomb structure having a catalyst coated thereon is mounted in a front portion of the DPF. In the honeycomb structure, by changing NO contained in exhaust gas to NO₂, PM deposited in the DPF is combusted, or, by engine control, post injection is conducted to oxidize uncombusted fuel and raise exhaust gas temperature, thereby combusting PM deposited in the DPF for regeneration of the DPF.

In order to smoothly combust PM deposited in a DPF for regeneration of the DPF, it is necessary to lengthen the time that the aforementioned catalyst coated on the honeycomb structure is at activation temperature as much as possible. However, a diesel engine has low exhaust gas temperature, and temperature of a honeycomb structure does not reach catalyst activation temperature in a low load condition. Even after high load driving, upon drastic transition to low load, temperature of the honeycomb structure rapidly falls and sometimes becomes lower than the catalyst activation temperature, which causes a problem of hindering combustion of PM and/or a problem of incompletion of compulsory regeneration.

In view of the aforementioned problems, there has generally been performed quick raise of the temperature to the catalyst activation temperature by thinning the cell partition walls of the honeycomb structure, raising porosity, or the like, to decrease thermal capacity of the honeycomb structure and improve a temperature rise characteristic of the substrate.

However, though decrease in thermal capacity of the substrate can improve the temperature rise characteristic and make temperature of the catalyst coated on the substrate rapidly reach the catalyst activation temperature, the temperature of the catalyst rapidly becomes lower than the catalyst activation temperature when exhaust gas temperature falls down. In addition, when the thermal capacity of the substrate is increased in order to inhibit temperature fall of the substrate upon the exhaust gas temperature fall, the temperature rise characteristic is deteriorated. Thus, a mutually incompatible relation is shown. That is, it has been difficult to lengthen the time that the catalyst coated on the honeycomb structure is at activation temperature only by changing the partition wall thickness or the porosity of the substrate simply to change the thermal capacity.

In such circumstances, there is disclosed a honeycomb structure constituted of partition walls having two or more kinds of thickness (JP-A-2007-289924). The honeycomb structure disclosed in JP-A-2007-289924 solves the antinomy problem of difficulty in satisfying both the quick temperature-rising ability and the high temperature capacity at the same time and can smoothly complete the combustion of the PM trapped in the filter and effectively purify exhaust gas by mounting the honeycomb structure in a front portion of the filter for trapping particulate matter (PM) discharged from a diesel engine.

In addition, there is disclosed a honeycomb structure where the partition wall thickness of the cells from the outermost periphery to a predetermined position is different from that of the remaining cells located inside the aforementioned cells (Republication Patent WO02/011884).

However, heretofore, exhaust gas temperature is low at the time of engine start or in a low load condition to sometimes become lower than the catalyst activation temperature. That is, though it is necessary to lengthen the time that the catalyst coated on the honeycomb structure is at activation temperature in order to keep high purification rate by the contact of exhaust gas with the catalyst, there caused depression in purification rate because of the temperature not reaching the catalyst activation temperature. When the thickness of the partition walls is decreased, they are easily cooled due to decrease in thermal capacity. When the thickness of the partition walls is increased, the temperature rise performance is deteriorated.

In JP-A-2007-289924 and WO02/011884, there are shown the effect of increasing heat retaining ability due to large thermal capacity in a portion having thick partition walls and the effect of a fast temperature rise performance due to small thermal capacity in a portion having thin partition walls. However, there is desired a honeycomb catalyst article where the time that the catalyst coated on the honeycomb structure is at activation temperature is lengthened with better temperature rise performance and heat retaining ability.

EP 1 384 507 describes a honeycomb structure in which a plurality of through-holes extending in the axial direction are formed by a plurality of partition walls, wherein the plurality of partition walls are constituted by a plurality of partition walls having different thicknesses and, of the plurality of partition walls having different thicknesses, those partition walls having a thickness larger than the average thickness of all partition walls are provided at a higher proportion in a particular portion of the honeycomb structure than in another portion.

EP 1 384 508 describes a honeycomb structure constituted by porous cell walls which form a cell group consisting of a plurality of cells adjacent to each other, and a honeycomb outer wall which surrounds and holds the outermost peripheral cells located at the circumference of the cell group, in which the porosity is 5% to less than 30%, the basic wall thickness (T_{c}) of the cell walls is 0.030 mm ≤ T_{c} < 0.076 mm, the average surface roughness (Raₛ) of the outer wall is 0.5 µm ≤ Raₛ ≤ 10 µm, and/or the average height (RzDINₛ) on the surface of the outer wall from a local maximum point to a next local minimum point is 5 µm ≤ RzDINₛ ≤ 50 µm.

JP 4 231614 A describes a diesel particulate filter having a low back pressure on the outer layer side, and a high back pressure on the inner layer side. It can have air holes which become gradually smaller from the first carrier on the outer layer side to the first carrier on the inner layer side, or a cell diameter which gradually becomes larger from the first carrier on the outer layer side to the second carrier on the inner layer side.

EP 0 459 534 describes an inert monolithic support having thereon a metal oxide layer and a catalytically active component supported by the metal oxide. The distribution of the metal oxide is uniform and the concentration of the active component increases from the inside to the outside.

US 2002/042344 describes a ceramic catalyst body having a catalyst component supported on a monolithic ceramic carrier having a multitude of pores or element capable of directly supporting the catalyst on the surface of cordierite, the quantity of catalyst per unit volume in the middle portion of the carrier being 1.1 times, preferably twice or larger, that of the peripheral portion B.

### Summary of the Invention

The present invention has been made in view of the aforementioned problems and aims to provide a honeycomb catalyst article satisfying both quick temperature-rising ability and high thermal capacity at the same time and capable of effectively purifying exhaust gas discharged from a diesel engine or the like.

According to the present invention, there is provided the following honeycomb catalyst article.
[1] A honeycomb catalyst article having a plurality of cells extending though in parallel with one another between two end faces and formed by a plurality of partition walls, wherein the cells are formed by the partition walls formed of ceramic and including first partition walls having a first thickness and second partition walls having a second thickness smaller than the first thickness, an inner peripheral portion of the honeycomb catalyst article is constituted of the second partition walls, an outer peripheral portion surrounding the inner peripheral portion of the honeycomb catalyst article is constituted of the first partition walls, a ratio of a first partition wall region area constituted of the first partition walls to a second partition wall region area constituted of the second partition walls (first partition wall region area / second partition wall area) in a cross section perpendicular to a cell extension direction is 1 to 30, and a larger amount of catalyst is loaded on the first partition walls than on the second partition walls; wherein a ratio of the thickness of the first partition walls to the thickness of the second partition walls (first partition wall thickness / second partition wall thickness), both having the catalyst loaded thereon, is 1.1 to 2.
[2] The honeycomb catalyst article according to [1], wherein, before loading of the catalyst, the first partition walls have a thickness of 0.127 to 0.229 mm, and the second partition walls have a thickness of 0.05 to 0.127 mm.
[3] The honeycomb catalyst article according to [1] or [2], wherein the honeycomb catalyst has a circular cross section perpendicular to the cell extension direction, and the second partition wall region has a circular shape with the central axis of the honeycomb catalyst article as the center thereof.

In a honeycomb catalyst article of the present invention, the first partition walls in the outer peripheral portion has large thermal capacity, and the cells surrounded by the first partition walls have improved heat retaining ability, while the second partition walls in the inner peripheral portion (central portion) has low thermal capacity to improve temperature rise performance. Since a larger amount of catalyst is loaded on the first partition walls than on the second partition walls, when it is used for exhaust gas purification of a diesel-powered automobile or the like, the catalyst is activated soon to be able to effectively purify exhaust gas even in the case of frequently repeating the engine stop, start, and run.

### Brief Description of the Drawings

[Fig. 1] Fig. 1 is a perspective view showing an embodiment of a honeycomb structure of the present invention.
[Fig. 2] Fig. 2 is an explanatory view showing the embodiment 1 on the end face on one side of a honeycomb structure.
[Fig. 3] Fig. 3 is an explanatory view showing a relation between the radius R of a honeycomb structure and the radius r of the second partition wall region area.
[Fig. 4] Fig. 4 is an explanatory view showing the embodiment 2 on the end face on one side of a honeycomb structure.
[Fig. 5] Fig. 5 is an explanatory view showing the embodiment 3 on the end face on one side of a honeycomb structure.
[Fig. 6] Fig. 6 is a view showing a NEDC operation mode.

### Reference Numerals

1: partition wall, 1a: first partition wall (thick wall), 1b: second partition wall (thin wall), 2: cell, 10: honeycomb catalyst article

### Detailed Description of the Invention

Hereinbelow, embodiments of the present invention will be described with referring to drawings. However, the present invention is by no means limited to the following embodiments, and changes, modifications, and improvements may be made as long as they do not deviate from the scope of the invention.

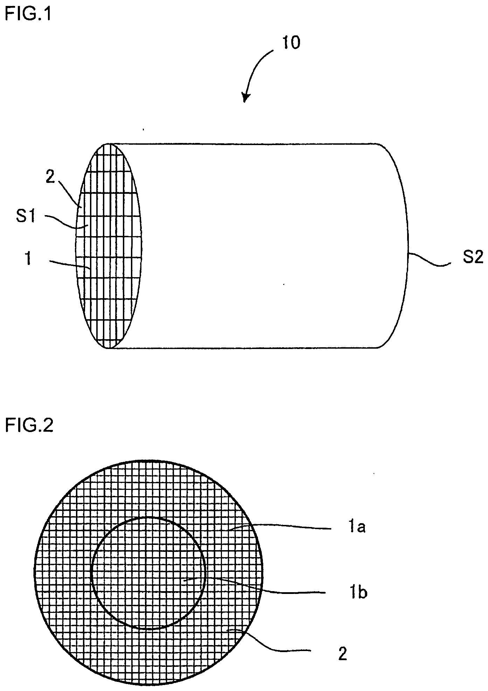

Fig. 1 is a perspective view showing an embodiment of a honeycomb catalyst article of the present invention, and Fig. 2 is an explanatory view showing the embodiment 1 on the end face on one side of the honeycomb catalyst article shown in Fig. 1. As shown in Fig. 1, the honeycomb catalyst article of the present embodiment is a honeycomb catalyst article 10 having a plurality of cells 2 formed of a plurality of partition walls 1 and extending through in parallel with one another between the two end faces S1 and S2. The partition walls 1 are formed of ceramic and the cells 2 are formed by the partition walls 1 including both the first partition walls 1a having the first thickness and the second partition walls 1b having the second thickness smaller than the first thickness. The inner peripheral portion of the honeycomb catalyst article 10 is constituted of the second partition walls 1b, and the outer peripheral portion surrounding the inner peripheral portion of the honeycomb catalyst article 10 is constituted of the first partition walls 1a. The ratio of the first partition wall region area constituted of the first partition walls 1a to the second partition wall region area constituted of the second partition walls 1b (first partition wall region area / second partition wall area) in a cross section perpendicular to a cell extension direction is 1 to 30, and a larger amount of catalyst is loaded on the first partition walls 1a than on the second partition walls 1b.

The first partition wall region area is preferably larger than the second partition wall region area. Specifically, the first partition wall region area / second partition wall area ratio is preferably 1 to 30, more preferably 1.7 to 8. As the second partition wall region area (thin partition wall region) becomes larger, temperature rises more easily. However, when the engine is stopped, temperature easily falls. In addition, as the first partition wall region area (thick partition wall region) increases, it becomes harder to raise temperature, and temperature hardly falls when the engine is stopped. Therefore, a balance between temperature fall performance and temperature rise performance is important, and the aforementioned range is preferable.

By such constitution, the first partition wall 1a in the outer peripheral portion has large thermal capacity, and the gas flow rate is low in the cells 2 surrounded by the first partition walls 1a to have slow temperature fall due to heat transfer, which improves heat retaining ability. In addition, the second partition walls 1b in the inner peripheral portion (central portion) has small thermal capacity, and the gas flow rate is high in the cells 2 surrounded by the second partition walls 1b to have fast temperature rise due to heat transfer, which improves temperature rise performance. Since a larger amount of catalyst is loaded on the first partition walls 1a than on the second partition walls 1b, when it is used for exhaust gas purification of a diesel-powered automobile or the like, the catalyst is activated soon to be able to effectively purify exhaust gas even in the case of repeating the engine stop, start, and run. Further, since exhaust gas tends to flow more in the center of the honeycomb catalyst article 10, by having the second partition walls 1b (thin walls) in the central portion and the first partition walls 1a (thick walls) in the outer peripheral portion, the catalyst is easily activated soon after the engine is started.

Therefore, by the constitution as described above, the thin partition wall 1b portion is first heated upon heating, and the temperature of the catalyst coated on the honeycomb catalyst article 10 quickly reaches the activation temperature. When the exhaust gas temperature falls, cooling of the thick partition walls 1a portions becomes slow to be able to lengthen the time that temperature of the catalyst is in the catalyst activation temperature range.

In a honeycomb catalyst article 10 of the present invention, before loading of the catalyst, the first partition walls 1a preferably have a thickness of 0.127 to 0.229 mm, and the second partition walls preferably have a thickness of 0.05 to 0.127 mm; and after loading of the catalyst, the first partition walls 1a preferably have a thickness of 0.19 to 0.282, and the second partition walls 1b preferably have a thickness of 0.081 to 0.166 mm. As the thin walls become thinner, temperature rises more easily. However, when the engine is stopped, temperature easily falls. As the thick walls become thicker, it becomes more difficult to raise temperature. However, when the engine is stopped, temperature hardly falls. Therefore, a balance between the temperature fall performance and temperature rise performance is important, and the aforementioned ranges are preferable.

In a honeycomb catalyst article 10 of the present invention, before loading of the catalyst, the ratio of the thickness of the first partition walls 1a to the thickness of the second partition walls 1b (first partition wall thickness / second partition wall thickness) is preferably 1.5 to 4.0. When the ratio is below 1.5, the honeycomb catalyst article is close to a conventional honeycomb catalyst article having uniform partition wall thickness, and an effect in improving the temperature rise performance and the heat retaining ability is hardly obtained. On the other hand, when the ratio is above 4,0, pressure loss in the cells 2 formed by the first partition walls 1a increases, and a pressure loss difference from the thin wall portion increases to make gas permeation region to a carrier uneven. In addition, the ratio of the thickness of the first partition walls to the thickness of the second partition walls (first partition wall thickness / second partition wall thickness) after the catalyst is loaded thereon is 1.1 to 2.

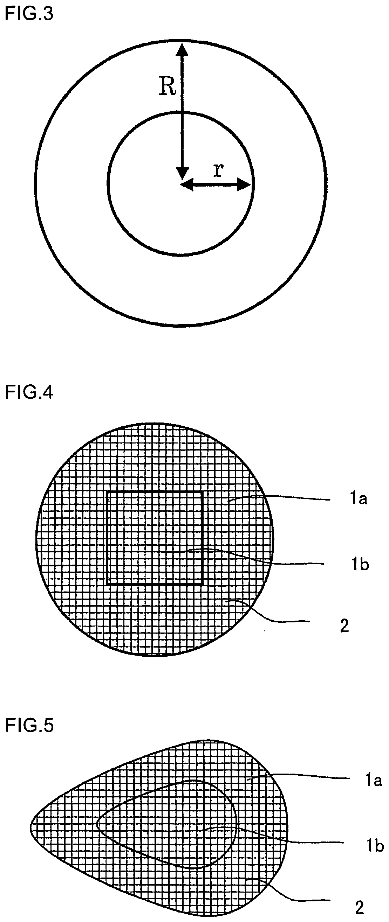

The honeycomb catalyst article 10 has a circular cross section perpendicular to the cell extension direction, and the second partition wall region has a circular shape with the central axis of the honeycomb catalyst article 10 as the center thereof. As shown in Fig. 3, with the radius R of the circular honeycomb catalyst article 10 and the radius r of the second partition wall region, the area ratio (πR²-πr²)/πr², i.e., (R²-r²) /r² is preferably 1 to 30.

In the present embodiment, the partition walls 1 constituting the honeycomb catalyst article 10 is constituted of at least one kind of ceramic selected from the group consisting of cordierite, alumina, mullite, and lithium aluminosilicate (LAS).

Examples of the catalyst include an oxidation catalyst, a NOx adsorber reduction catalyst, a SCR catalyst, and a ternary catalyst. The catalyst coating amount is large in the thick wall portion (first partition walls 1a) of the outer peripheral portion and small in the thin wall portion (second partition walls 1b) of the inner peripheral portion. This increases heat generation due to the reactions of the following (1) and (2) in the portion having a large catalyst coating amount in comparison with that in the portion having a small catalyst coating amount to reduce the demerit of low temperature rise performance due to high thermal capacity in the thick wall portion. In addition, in the thin wall portion of the inner peripheral portion, since time spent for reaching the catalyst activity temperature range is short because of high temperature rise performance, the catalyst layer may be made thinner than that of the general case. By such appropriate disposition of the catalyst, it contributes to reduction in the catalyst amount.

HC+O₂ → H₂O + CO₂ + reaction heat ... (1)

CO+O₂ →CO₂ + reaction heat ... (2)

The difference in the catalyst coat amount depending on the portion in the honeycomb can easily be obtained by varying the number of times of coating. For example, after the coating is first performed on the whole, a cover made of a rubber plate is arranged on a portion corresponding to the thinner wall portion of the inner peripheral portion, and the catalyst is coated on the remaining portion (portion corresponding to the thick wall portion of the outer peripheral portion) to obtain the difference in the coat amount. The catalyst used for coating enters inside the honeycomb, and, at the same time, the catalyst layer itself obtains a porous structure. In the thick coated catalyst layer, noble metal particles is held more on the porous surface per unit surface area of the honeycomb surface than in a portion where the coating is not thick.

The catalyst coat amount is preferably 150 to 300 g/L. When it is below 150 g/L, the effect in improving the heat retaining ability and the temperature rise performance can not be obtained sufficiently. When it is above 300 g/L, clogging may easily be caused by the catalyst coat, or the noble metal may easily aggregate.

By such constitution, at the engine start, the thin walls 1b are excellent in temperature rise performance to enable the temperature to quickly reach the catalyst activation temperature, and, during driving, since the thick walls 1a are excellent in heat retaining ability, it is possible to maintain the temperature in the catalyst activation region even in the case of frequent stop during a street run.

### (Embodiment 2)

Fig. 4 shows a honeycomb catalyst article 10 of the embodiment 2. The honeycomb catalyst article 10 of the embodiment 2 has a circular cross section perpendicular to the cell extension direction with the radius R, and the second partition wall region is formed to have a quadrangular shape with the central axis of the honeycomb catalyst article 10 as the center thereof. This constitution makes forming easy.

### (Embodiment 3)

Fig. 5 shows a honeycomb catalyst article 10 of the embodiment 3. The honeycomb catalyst article 10 of the embodiment 3 has an egg-shaped cross section perpendicular to the cell extension direction, and the second partition wall region is formed to have an egg shape in the inner peripheral portion of the honeycomb catalyst article 10 in a similar manner. This constitution enables temperature to uniformly transfer from the center.

In addition, any of the honeycomb catalyst articles 10 described above can be used as a purification apparatus disposed in a former portion of the filter. Specifically, it can be used as a honeycomb for a DOC (Diesel Oxidation Catalyst) by being disposed in a former portion of the filter of the purification apparatus of a diesel-powered automobile. Since the exhaust gas temperature of a diesel-powered automobile is low, there is a case that the catalyst loaded on the DOC does not work effectively. As a technique to improve it, a technique to realize early temperature rise and slow temperature fall is important, and a honeycomb catalyst article 10 of the present invention can quickly rise temperature and has heat retaining ability. Also, in a ternary catalyst used for a gasoline-powered automobile, since early temperature rise and slow temperature fall can be realized, by the use of it as a purification apparatus for a gasoline-powered automobile, further exhaust gas cleaning can be realized.

The temperature of the thin wall portion can quickly reach the catalyst activation temperature at engine start because the thin wall portion is excellent in temperature rising performance. This is because (1) the thin wall portion has a low gas inflow resistance to easily induce more combustion gas having heat than in a common article and (2) the thermal capacity is small because of the thinness to have excellent temperature rise in comparison with a common article. On the other hand, the thick wall portion has low inflow of combustion gas and relatively low temperature rise effect due to heat transfer from the gas. However, because of the large catalyst amount, the aforementioned decomposition reaction heat, also, can be used for temperature rise, which reduce the demerit of just thick walls having only large thermal capacity. Since the thin wall portion has a great merit due to the thinness, the required catalyst amount is not as much as in the thick wall portion, and the amount of the catalyst of noble metal can be reduced significantly.

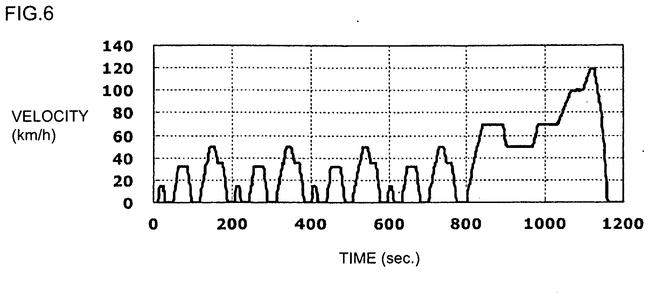

In addition, since the thick wall portion is excellent in isothermal holding, even in the case of frequent stop during a street run (though gas temperature is low while idling, even while idling at a velocity of 0 after the start of driving in Fig. 6), the catalyst activation temperature can be maintained in a thick wall portion. This is the same phenomenon as the aforementioned case. The low temperature gas having a temperature fall effect hardly flows into the thick wall portion to have a low heat release effect, and heat generated by the aforementioned decomposition reaction of the components in the low temperature gas can effectively be used for maintaining the temperature because of the large catalyst amount. Therefore, when driving is started after idling, temperature of the thin wall portion reaches the catalyst activation temperature very quickly, and the thick wall portion maintains relatively high temperature even during idling. Therefore, the function over the whole honeycomb catalyst article is exhibited in a very short period of time in comparison with a general article.

### Example

Hereinbelow, the present invention will be described in more detail on the basis of Examples. However, the present invention is by no means limited to the Examples.

### (Example 1)

To obtain cordierite after firing, raw materials such as talc, kaolin, alumina, and silica were blended at a predetermined compounding ratio, and a binder, a surfactant, and water were added to them at a predetermined compounding ratio, followed by mixing them together to obtain kneaded clay. Regarding the cordierite forming raw material, though the particle size, the components, and the like finally influence onporosity, thermal expansion coefficient, and the like, they can suitably be selected by a person of ordinary skill in the art, and also the binder and the surfactant can suitably determined. The kneaded clay was subjected to extrusion forming using an extruder having a die where the slit width was adjusted in consideration of the shrinkage ratio in the drying and firing stages so as to obtain the cell structure shown in Table 1 after firing. Thus, there was manufactured a honeycomb structure having a diameter of 100 mm, a length of 120 mm, and an almost square cell 2 shape after drying and firing (see Fig. 1). A ternary catalyst was loaded as the catalyst. Example 1 is an evaluation carrier where the inner peripheral portion is formed of the partition walls 1b (thin walls), while the outer peripheral portion surrounding the inner peripheral portion is formed of the partition walls 1a (thick walls). Table 1 shows the radius R of the honeycomb structure (catalyst article) and the radius r of the partition wall 1b portion (R and r respectively show a proportion the length. See Fig. 3). Further, Table 1 shows the ratio of the area of the partition walls 1a to the area of the partition walls 1b (first partition wall region area / second partition wall region area). Table 1 furthermore shows thickness of each of the partition walls and the ratio of the thickness of the partition walls 1a to the thickness of the partition walls 1b before loading of the catalyst (honeycomb structure) and after loading of the catalyst (honeycomb catalyst article 10).

### (Examples 2 to 6 and Comparative Examples 1 to 3)

Examples 2 to 6 and Comparative Examples 1 to 3 were manufactured with the R and the r shown in Table 1. Incidentally, each of Comparative Examples 1 and 2 was a honeycomb structure (catalyst article) having a uniform partition wall thickness. For example, "3 mil / 600 cpsi" of Comparative Example 1 shows that the partition wall thickness is 3 mil and that the cell density is 600 cpsi.

**Table 1 - 1**

| | Radius ratio | | Area ratio | Before loading of catalyst | | |
|---|---|---|---|---|---|---|
| | R | r | First partition wall region area / second partition wall region area | Thickness b of partition wall 1b | Thickness a of partition wall 1a | Ratio (a/b) |
| | | | | (mm) | (mm) | |
| Example 1 | 4 | 2.83 | 1.00 | 0.102 | 0.152 | 1.50 |
| Example 2 | 5 | 3 | 1.78 | 0.102 | 0.152 | 1.50 |
| Example 3 | 2 | 1 | 3.00 | 0.102 | 0.152 | 1.50 |
| Example 4 | 3 | 1 | 8.00 | 0.102 | 0.152 | 1.50 |
| Example 5 | 5 | 1 | 24.00 | 0.102 | 0.152 | 1.50 |
| Comp. Ex. 1 | 1 | 1 | 0.00 | 3mil/600cpsi (0.0762mm/600cpsi) | | |
| Comp. Ex. 2 | 1 | 1 | 0.00 | 4mil/600cpsi (0.1016mm/600cpsi) | | |
| Comp. Ex. 3 | 10 | 9 | 0.23 | 0.102 | 0.152 | 1.50 |
| Comp. Ex. 4 | 10 | 1 | 99.00 | 0.102 | 0.152 | 1.50 |

**Table 1 - 2**

| | After loading of catalyst | | | | | Purification performance (g/mile) | |
|---|---|---|---|---|---|---|---|
| | Thickness b of partition wall 1b (including catalyst layer) | Thickness cb of catalyst layer on partition wall 1b | Thickness a of partition wall 1a (including catalyst layer) | Thickness ca of catalyst layer on partition wall 1a | Ratio of partition wall thickness (a/b) | HC | NOx |
| | (mm) | (mm) | (mm) | (mm) | | | |
| Example 1 | 0.137 | 0.036 | 0.193 | 0.041 | 1.41 | 0.22 | 0.46 |
| Example 2 | 0.137 | 0.036 | 0.193 | 0.041 | 1.41 | 0.15 | 0.38 |
| Example 3 | 0.137 | 0.036 | 0.193 | 0.041 | 1.41 | 0.1 | 0.31 |
| Example 4 | 0.137 | 0.036 | 0.193 | 0.041 | 1.41 | 0.12 | 0.34 |
| Example 5 | 0.137 | 0.036 | 0.193 | 0.041 | 1.41 | 0.26 | 0.43 |
| Comp. Ex. 1 | 0.114 | 0.038 | | | | 0.3 | 0.48 |
| Comp. Ex. 2 | 0.140 | 0.038 | | | | 0.35 | 0.54 |
| Comp. Ex. 3 | 0.137 | 0.036 | 0.193 | 0.041 | 1.41 | 0.28 | 0.47 |
| Comp. Ex. 4 | 0.137 | 0.036 | 0.193 | 0.041 | 1.41 | 0.33 | 0.46 |

For the measurement of harmful component emission, the honeycomb catalyst article of each of Examples and Comparative Examples was disposed in an exhaust gas system of a 2 liter gasoline engine automobile, and, by the use of the gasoline engine automobile, driving was performed in NEDC operation mode shown in Fig. 6 to measure emission of harmful components contained in exhaust gas discharged for 1 mile run. As the harmful components, hydrocarbon (HC) and nitrogen monoxide (NO) amounts (g) in the exhaust gas were measured.

The amounts of NOx and HC (uncombusted hydrocarbon) discharged from an engine of each of the evaluation carrier obtained by carrying out automobile evaluation are shown in Table 1. The lower these values are, the higher the purification rates are. As shown in Table 1, Examples 3 and 4 were preferable because they had both the heat retaining ability and the temperature rise performance. That is, as the second partition wall region area (thin wall region) becomes larger, the temperature more easily rises and more easily falls. Inversely, as the first partition wall region area (thick wall region) becomes larger, the temperature more hardly rises and more hardly falls. Therefore, Examples 3 and 4, which had the best balance between the heat retaining ability and the temperature rise performance, showed the best purification efficiency.

Next, in each of Examples 3 and 4, there was produced an evaluation carrier where the ratio of the radius R to the radius r was fixed, that is, the ratio of the area of the partition walls 1a and the area of the partition walls 1b (the first partition wall region area to the second partition wall region area) was fixed with changing the partition wall thickness. Table 2 shows R, r, and the partition wall thickness of each evaluation carrier.

**Table 2 - 1**

| | Ratio of radius | | Area ratio | Before loading of catalyst | | |
|---|---|---|---|---|---|---|
| | R | r | First partition wall region area / second partition wall region area | Thickness b of partition wall 1b | Thickness a of partition wall 1a | Ratio (a/b) |
| | | | | (mm) | (mm) | |
| Example 1-1* | 4 | 2.83 | 1.00 | 0.051 | 0.203 | 4.00 |
| Example 1-3 | | | | 0.102 | 0.152 | 1.50 |
| Example 3-1* | 2 | 1 | 3.00 | 0.051 | 0.203 | 4.00 |
| Example 3-3 | | | | 0.102 | 0.152 | 1.50 |
| Example 3-4 | | | | 0.127 | 0.152 | 1.20 |
| Example 4-1* | 3 | 1 | 8.00 | 0.051 | 0.229 | 4.50 |
| Example 4-2* | | | | 0.051 | 0.203 | 4.00 |
| Example 4-4 | | | | 0.102 | 0.152 | 1.50 |
| Example 4-5 | | | | 0.127 | 0.152 | 1.20 |
| Comp. Ex. 1 | 1 | 1 | | 3 mil / 600 | cpsi (0.0762 mm | / 600 cpsi) |
| Comp. Ex. 2 | 1 | 1 | | 4 mil / 600 | cpsi (0.1016 mm | / 600 cpsi) |

| | | | | | | |
|---|---|---|---|---|---|---|
| Wherein * denotes a reference Example. | | | | | | |

**Table 2 - 2**

| | After loading of catalyst | | | | | | Purification performance (g/mile) | |
|---|---|---|---|---|---|---|---|---|
| | Thickness b of partition wall 1b (including catalyst layer) | Thickness cb of catalyst layer on partition wall 1b | Thickness a of partition wall 1a (including catalyst layer) | Thickness ca of catalyst layer on partition wall 1a | Ratio of partition wall thickness (a/b) | Ratio of catalyst layer (ca/cb) | HC | NOx |
| | (mm) | (mm) | (mm) | (mm) | | | | |
| Example 1-1* | 0.081 | 0.031 | 0.25 | 0.048 | 3.093 | 1.58 | 0.21 | 0.47 |
| Example 1-3 | 0.137 | 0.036 | 0.19 | 0.041 | 1.407 | 1.14 | 0.25 | 0.48 |
| Example 3-1* | 0.081 | 0.031 | 0.25 | 0.048 | 3.093 | 1.58 | 0.07 | 0.29 |
| Example 3-3 | 0.137 | 0.036 | 0.19 | 0.041 | 1.407 | 1.14 | 0.15 | 0.35 |
| Example 3-4 | 0.165 | 0.038 | 0.19 | 0.041 | 1.169 | 1.07 | 0.26 | 0.41 |
| Example 4-1* | 0.081 | 0.031 | 0.28 | 0.053 | 3.467 | 1.75 | 0.16 | 0.38 |
| Example 4-2* | 0.081 | 0.031 | 0.25 | 0.048 | 3.093 | 1.58 | 0.17 | 0.38 |
| Example 4-4 | 0.137 | 0.036 | 0.19 | 0.041 | 1.407 | 1.14 | 0.18 | 0.39 |
| Example 4-5 | 0.165 | 0.038 | 0.19 | 0.041 | 1.169 | 1.07 | 0.27 | 0.43 |
| Comp. Ex. 1 | 0.114 | 0.038 | | | | | 0.30 | 0.48 |
| Comp. Ex. 2 | 0.140 | 0.038 | | | | | 0.35 | 0.54 |

| | | | | | | | | |
|---|---|---|---|---|---|---|---|---|
| Wherein * denotes a reference Example. | | | | | | | | |

The results of carrying out the automobile evaluation using these evaluation carriers are shown in Table 2. As the second partition wall region area (thin wall region) becomes larger, or as the thin wall becomes thinner, temperature more easily rises and more easily falls. Inversely, as the first partition wall region area (thick wall region) becomes larger, or the thick wall becomes thicker, temperature more hardly rises and more hardly falls. High purification efficiency was shown in Examples 3-1*, 3-3 and 4-1*, 4-2* and 4-4 (wherein * denotes a reference Example), which have a good balance between the heat retaining ability and the temperature rise performance. From these results, the ratio of the first partition wall thickness to the second partition wall thickness after loading of the catalyst is 1.1 to 2. Since the implication of improvement is lacked unless the purification performance is higher by at least about 10% than that of common articles (Comparative Examples 1 and 2), the ratio of the first partition wall thickness to the second partition wall thickness after loading of the catalyst is 1.1 or more. On the other hand, since increase of the catalyst thickness increases the amount of noble metal to be used, at the saturation point or more, where no further improvement in purification performance is shown, it is no use raising the ratio, and it is preferably 1.7 or less.

A honeycomb catalyst article of the present invention is particularly effective for purifying exhaust gas from diesel engine, where exhaust gas temperature is relatively low and can effectively used as a substrate for a SCR (selective catalytic reduction) catalyst for purifying NOx in exhaust gas and as a diesel oxidation catalyst besides a honeycomb catalyst article for being disposed in a DPF former portion. In addition, also in a gasoline engine, where exhaust gas temperature is relatively high, it is effectively used for dealing with exhaust gas.

## Claims

1. A honeycomb catalyst article (10) having a plurality of cells (2) extending though in parallel with one another between two end faces and formed by a plurality of partition walls (1),
wherein the cells (2) are formed by the partition walls (1) formed of ceramic and including first partition walls (1a) having a first thickness and second partition walls (1b) having a second thickness smaller than the first thickness,
an inner peripheral portion of the honeycomb catalyst article (10) is constituted of the second partition walls (1b),
an outer peripheral portion surrounding the inner peripheral portion of the honeycomb catalyst article (10) is constituted of the first partition walls (1a),
a ratio of a first partition wall region area constituted of the first partition walls (1a) to a second partition wall region area constituted of the second partition walls (1b) (first partition wall region area / second partition wall area) in a cross section perpendicular to a cell extension direction is 1 to 30, and
a larger amount of catalyst is loaded on the first partition walls (1a) than on the second partition walls (1b) ;
wherein a ratio of the thickness of the first partition walls (1a) to the thickness of the second partition walls (1b) (first partition wall thickness / second partition wall thickness), both having the catalyst loaded thereon, is 1.1 to 2.

2. The honeycomb catalyst article (10) according to Claim 1, wherein, before loading of the catalyst, the first partition walls (1a) have a thickness of 0.127 to 0.229 mm, and the second partition walls (1b) have a thickness of 0.05 to 0.127 mm.

3. The honeycomb catalyst article (10) according to claim 1 or claim 2, wherein the honeycomb catalyst has a circular cross section perpendicular to the cell extension direction, and the second partition wall region has a circular shape with the central axis of the honeycomb catalyst article (10) as the center thereof.

## Patentansprüche

1. Wabenkatalysatorartikel (10) mit einer Vielzahl von Zellen (2), die sich parallel zueinander zwischen zwei Endflächen hindurcherstrecken und die durch eine Vielzahl von Trennwänden (1) gebildet sind,
wobei die Zellen (2) durch die Trennwände (1) ausgebildet sind, welche aus Keramik hergestellt sind und erste Trennwände (1a) mit einer ersten Dicke und zweite Trennwände (1b) mit einer zweiten Dicke, die kleiner als die erste Dicke ist, aufweisen,
wobei ein Innenumfangsabschnitt des Wabenkatalysatorartikels (10) aus den zweiten Trennwänden (1 b) besteht,
wobei ein Außenumfangsabschnitt, der den Innenumfangsabschnitt des Wabenkatalysatorartikels (10) umgibt, aus den ersten Trennwänden (1a) besteht,
wobei ein Verhältnis einer ersten Trennwandbereichsfläche, die aus den ersten Trennwänden (1a) besteht, zu einer zweiten Trennwandbereichsfläche, die aus den zweiten Trennwänden (1b) besteht (erste Trennwandbereichsfläche / zweite Trennwandbereichsfläche) in einem Querschnitt senkrecht zu einer Richtung, in der sich die Zellen erstrecken, zwischen 1 und 30 beträgt und
wobei die ersten Trennwände (1a) mit einer größeren Menge an Katalysator beladen sind als die zweiten Trennwände (1b);
wobei ein Verhältnis der Dicke der ersten Trennwände (1a) zu der Dicke der zweiten Trennwände (1b) (erste Trennwanddicke / zweite Trennwanddicke), welche beide mit Katalysator beladen sind, von 1,1 bis 2 beträgt.

2. Wabenkatalysatorartikel (10) nach Anspruch 1, wobei vor dem Beladen mit dem Katalysator die ersten Trennwände (1a) eine Dicke von 0,127 bis 0,229 mm und die zweiten Trennwände (1 b) eine Dicke von 0,05 bis 0,127 mm aufweisen.

3. Wabenkatalysatorartikel (10) nach Anspruch 1 oder 2, wobei der Wabenkatalysator einen kreisförmigen Querschnitt senkrecht zu der Richtung, in der sich die Zellen erstrecken, aufweist und der zweite Trennwandbereich eine kreisförmige Form aufweist, deren Mittelpunkt die Mittelachse des Wabenkatalysatorartikels (10) ist.

## Revendications

1. Article de catalyseur en nid d'abeilles (10) comportant une pluralité de cellules (2) s'étendant parallèlement les unes aux autres entre deux faces d'extrémité et formées par une pluralité de parois de séparation (1),
dans lequel les cellules (2) sont formées par les parois de séparation (1) formées en céramique, et comprenant des premières parois de séparation (1a) ayant une première épaisseur et des secondes parois de séparation (1b) ayant une seconde épaisseur inférieure à la première épaisseur,
une partie périphérique interne de l'article de catalyseur en nid d'abeilles (10) est constituée des secondes parois de séparation (1b),
une partie périphérique externe entourant la partie périphérique interne de l'article de catalyseur en nid d'abeilles (10) est constituée des premières parois de séparation (1a),
un rapport d'une aire de zone de premières parois de séparation constituée des premières parois de séparation (1a) sur une aire de zone de secondes parois de séparation constituée des secondes parois de séparation (1b) (première aire de zone de parois de séparation/seconde aire de zone de parois de séparation) dans une section transversale perpendiculaire à une direction d'extension de cellules est de 1 à 30, et
une plus grande quantité de catalyseur est chargée sur les premières parois de séparation (1a) que sur les secondes parois de séparation (1b) ;
dans lequel un rapport de l'épaisseur des premières parois de séparation (1a) sur l'épaisseur des secondes parois de séparation (1b) (épaisseur de premières parois de séparation/ épaisseur de secondes parois de séparation), le catalyseur étant chargé sur la totalité de celles-ci, est de 1,1 à 2.

2. Article de catalyseur en nid d'abeilles (10) selon la revendication 1 dans lequel, avant le chargement du catalyseur, les premières parois de séparation (1a) ont une épaisseur de 0,127 à 0,229 mm, et les secondes parois de séparation (1b) ont une épaisseur de 0,05 à 0,127 mm.

3. Article de catalyseur en nid d'abeilles (10) selon la revendication 1 ou 2, dans lequel, le catalyseur en nid d'abeilles a une section transversale circulaire perpendiculaire à la direction d'extension de cellules, et la zone de secondes parois de séparation a une forme circulaire avec l'axe central de l'article de catalyseur en nid d'abeilles (10) en tant que centre de celle-ci.
